# EUROPÄISCHE PATENTSCHRIFT

(11) **EP 3 481 188 B1**
(45) Veröffentlichungstag und Bekanntmachung des Hinweises auf die Patenterteilung: **09.08.2023**
(21) Anmeldenummer: 17734112.0
(22) Anmeldetag: 04.07.2017
(51) Int. Cl.: A01M 21/04, A01M 7/00, B05B 7/32, B05B 12/00, B05B 12/08, B05B 12/14, B05B 9/08, B05B 12/12

(54) **SPRÜHGERÄT MIT DRUCKLOSEN SPRÜHGUTBEHÄLTERN**
SPRAYING DEVICE WITH UNPRESSURISED CARTRIDGES
SYSTÈME DE PULVÉRISATION COMPRENNANT DES BACS SANS PRESSION

(30) Priorität: 11.07.2016 US 201662360548 P; 11.07.2016 EP 16178766; 11.07.2016 EP 16178764; 11.07.2016 US 201662360555 P
(43) Veröffentlichungstag der Anmeldung: 15.05.2019
(73) Patentinhaber: Bayer CropScience Aktiengesellschaft, 40789 Monheim am Rhein (DE)
(72) Erfinder: GUTSMANN, Volker, 40764 Langenfeld (DE); REID, Byron, Raleigh NC 27614 (US)
(74) Vertreter: BIP Patents
(86) Internationale Anmeldenummer: PCT/EP2017/066611
(87) Internationale Veröffentlichungsnummer: WO 2018/011011

(56) Entgegenhaltungen:
- EP-A1- 0 718 213
- WO-A1-2015/087805
- WO-A2-2013/165684
- DE-A1-102013 109 785
- GB-A- 2 213 031
- US-A1- 2005 006 400

## Beschreibung

Die vorliegende Erfindung betrifft die Applikation von flüssigen Wirkstoffen mit Hilfe eines tragbaren Sprühgeräts. Gegenstand der vorliegenden Erfindung ist eine tragbare Vorrichtung zur Applikation von Wirkstoffen sowie ein Verfahren zur Applikation von Wirkstoffen mit Hilfe eines tragbaren Sprühgeräts.

Tragbare Sprühgeräte zum Applizieren von Wirkstoffen wie Pestiziden, Insektiziden, Herbiziden und Fungiziden sind bekannt (DE102013109785A1, US2006/0249223A1, US2006/0102245A1, US2006/0261181A1, US2005/0006400A1).

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirkt, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömte dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Nachteilig an einem solchen Sprühgerät ist, dass der Austreibdruck durch die manuell betriebene Luftpumpe nicht konstant gehalten werden kann. Das Ergebnis ist ein sich mit der Flussgeschwindigkeit änderndes Sprühmuster. Dementsprechend kann der Wirkstoff nur ungenau dosiert werden.

Eine elektrisch betriebene Luftpumpe kann hier Abhilfe schaffen, aber für eine gezielte, genaue und gleichmäßige Applikation des Wirkstoffs ist es erforderlich, dass der Druck im Tank konstant gehalten wird. Zudem muss der Tank druckstabil sein. Meistens sind solche Tanks daher aus Metall oder dickwandigem Kunststoff gefertigt. Die Tanks sind entsprechend schwer und unhandlich.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig: Der Anwender kann in unerwünschten Kontakt mit dem Wirkstoff kommen. Es ist denkbar, dass dem Anwender bei der Berechnung der Mengen an Konzentrat und Verdünnungsmittel Fehler unterlaufen. Eine hohe Viskosität des Konzentrats kann zu einer ungenauen volumetrischen Abmessung der erforderlichen Menge führen.

Eine ungenaue Dosierung von Wirkstoffen kann eine Reihe von ungewollten Folgen haben. Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden.

Ein weiterer Nachteil des oben beschriebenen Sprühgeräts besteht darin, dass der Tank bei Verwendung eines anderen Wirkstoffs zunächst gereinigt werden muss. Ggf. muss die Reinigungsflüssigkeit entsorgt werden.

WO2013/165684A2 offenbart eine tragbare Sprühvorrichtung, bei dem eine zu dispergierende Substanz aus einer Kartusche gefördert und mit einem Dispersionsmittel vermischt wird. Es ist eine elektrisch angetriebene Pumpe vorhanden, welche sowohl das Dispersionsmittel als auch die zu dispergierende Substanz fördert. Im Wesentlichen wird dabei das Verdünnungsmittel gefördert und das Konzentrat über eine Venturi-Düse mitgerissen. Das Mischungsverhältnis wird über mechanische Mittel (definierte Querschnitte, Drossel u.ä.) eingestellt. Die Sprühvorrichtung ist für die Applikation von Pestiziden geeignet. Die Sprühvorrichtung verfügt über einen Handgriff, mit dem eine Applikation gestartet wird.

Ausgehend vom beschriebenen Stand der Technik bestand die Aufgabe darin, eine tragbare Vorrichtung zur Applikation von Wirkstoffen bereitzustellen, die einfach in der Handhabung ist, bei der keine manuelle Verdünnung von Konzentraten erforderlich ist, die eine genau definierbare Menge an Wirkstoff abgibt, die vom Anwender bequem zu tragen und zu transportieren ist, bei der keine aufwändige Reinigung erforderlich ist, und die es erlaubt, einen definierten Verdünnungsgrad des Wirkstoffs in einem Verdünnungsmittel einzustellen und diesen auch bei einem veränderlichen Fluss während der Applikation konstant zu halten.

Erfindungsgemäß wird diese Aufgabe durch die Gegenstände der unabhängigen Ansprüche 1 und 9 erfüllt. Bevorzugte Ausführungsformen finden sich in den abhängigen Ansprüchen sowie in der Beschreibung.

Ein erster Gegenstand der vorliegenden Erfindung ist damit ein transportables Sprühgerät zur Schädlingsbekämpfung, das als Rucksack-Gerät ausgeführt ist, umfassend
- einen ersten Behälter mit einer ersten Flüssigkeit, wobei der erste Behälter über Gurte zum Transportieren des ersten Behälters auf dem Rücken eines Menschen verfügt,
- einen zweiten Behälter mit einer zweiten Flüssigkeit, wobei es sich bei der zweiten Flüssigkeit um ein Pestizid-Konzentrat handelt, wobei es sich bei der ersten Flüssigkeit um ein Verdünnungsmittel für das Pestizid-Konzentrat, vorzugsweise um Wasser handelt,
- eine Sprühdüse,
- eine erste Pumpe zur Förderung der ersten Flüssigkeit aus dem ersten Behälter in Richtung Sprühdüse,
- eine zweite Pumpe zur Förderung der zweiten Flüssigkeit aus dem zweiten Behälter in Richtung Sprühdüse,
- eine Mischkammer, mit einem Einlass für die erste Flüssigkeit, einem Einlass für die zweite Flüssigkeit und einem Auslass für eine Mischung von erster und zweiter Flüssigkeit, und
- einen Handgriff, wobei durch Betätigen des Handgriffs durch einen Nutzer ein Ventil geöffnet wird, so dass die erste Flüssigkeit und die zweite Flüssigkeit aus ihren jeweiligen Behältern in Richtung Sprühdüse und durch die Sprühdüse auf ein Zielobjekt gefördert werden
   dadurch gekennzeichnet, dass das Sprühgerät
- einen Durchflussmesser zur Messung des Flusses der ersten Flüssigkeit aus dem ersten Behälter in Richtung Sprühdüse umfasst, und
- eine Kontrolleinheit umfasst, die so konfiguriert ist, dass sie den Fluss der zweiten Flüssigkeit in Richtung der Sprühdüse auf Basis des gemessenen Flusses der ersten Flüssigkeit regelt.

Ein weiterer Gegenstand der vorliegenden Erfindung ist ein Verfahren zur Schädlingsbekämpfung durch Applikation einer Mischung aus einer ersten Flüssigkeit und einer zweiten Flüssigkeit auf ein Zielobjekt mittels eines transportablen, als Rucksack-Gerät ausgeführten Sprühgeräts, umfassend einen ersten Behälter umfassend die erste Flüssigkeit, einen zweiten Behälter umfassend die zweite Flüssigkeit, eine Sprühdüse, ein Ventil und einen Handgriff,
wobei es sich bei der zweiten Flüssigkeit um ein Pestizid-Konzentrat handelt, wobei es sich bei der ersten Flüssigkeit um ein Verdünnungsmittel für das Pestizid-Konzentrat, vorzugsweise um Wasser handelt,
wobei das Verfahren die folgenden Schritte umfasst:
   - Richten der Sprühdüse auf das Zielobjekt,
   - Betätigen des Handgriffs und dabei Öffnen des Ventils, und
   - Applizieren der Mischung,
wobei bei Öffnen des Ventils die erste Flüssigkeit mittels einer ersten Pumpe aus dem ersten Behälter in Richtung Sprühdüse gefördert wird,
dadurch gekennzeichnet, dass der Fluss der ersten Flüssigkeit mittels eines Durchflussmessers gemessen und der Messwert an eine Kontrolleinheit übertragen wird, die Kontrolleinheit eine zweite Pumpe ansteuert und den Fluss der zweiten Flüssigkeit aus dem zweiten Behälter in Richtung der Sprühdüse regelt, so dass die erste Flüssigkeit und die zweite Flüssigkeit in einem konstanten Mischungsverhältnis durch die Sprühdüse treten.

Erfindungsgemäß erfolgt die Förderung der ersten und der zweiten Flüssigkeit aus ihren Behältern in Richtung einer Sprühdüse mittels zweier Pumpen. Dadurch kann insbesondere der erste Behälter mit der ersten Flüssigkeit drucklos betrieben werden. Er kann aus leichteren und flexibleren Material gefertigt werden als die Drucktanks der bekannten Kompressionssprüher.

Zudem erfolgt die Mischung der ersten und der zweiten Flüssigkeit automatisch - eine manuelle Mischung durch einen Benutzer ist nicht erforderlich. Die erste und die zweite Flüssigkeit werden in separaten Behälter vorgehalten und sie werden erst unmittelbar vor der Applikation auf das Zielobjekt zusammengeführt. Dadurch können eventuelle Fehler des Anwenders beim Herstellen der Mischung und eine versehentliche Kontamination des Anwenders mit den Flüssigkeiten vermieden werden.

Beide Flüssigkeiten werden durch die jeweilige Pumpe in Richtung Sprühdüse gefördert. Sie verlassen das Sprühgerät durch die Sprühdüse gemeinsam als Mischung. Das Mischungsverhältnis wird automatisch auf Basis des Flusses der ersten Flüssigkeit eingestellt. Dazu misst ein Durchflussmesser den Fluss der ersten Flüssigkeit aus dem ersten Behälter in Richtung Sprühdüse und übermittelt ihn an die Kontrolleinheit. Die Kontrolleinheit regelt dann anhand dieses Flusses der ersten Flüssigkeit den Fluss der zweiten Flüssigkeit in Richtung Sprühdüse. Sinkt beispielsweise der Fluss der ersten Flüssigkeit, wird der Fluss der zweiten Flüssigkeit verringert, so dass das Mischungsverhältnis konstant bleibt. Steigt der Fluss der ersten Flüssigkeit, wird der Fluss der zweiten Flüssigkeit entsprechend erhöht.

Die einzelnen Elemente, die das erfindungsgemäße Sprühgerät und das erfindungsgemäße Verfahren kennzeichnen, werden nachfolgend näher erläutert. Bei dieser Erläuterung wird nicht zwischen Sprühgerät und Verfahren unterschieden. Stattdessen gelten die nachfolgenden Beschreibungen für alle Erfindungsgegenstände.

Das erfindungsgemäße Sprühgerät ist transportabel. Unter transportabel wird verstanden, dass das Gerät von einem Menschen ohne maschinelle Hilfsmittel von einem Ort zu einem anderen Ort gebracht werden kann.

In einer möglichen, nicht durch die Ansprüche abgedeckten Ausführungsform ist das Sprühgerät so ausgeführt, dass der Benutzer beim Transport einen Teil des Sprühgeräts, der den ersten Behälter umfasst, in der einen Hand trägt, und einen anderen Teil des Sprühgeräts, der die Sprühdüse umfasst, in der anderen.

Das erfindungsgemäße Sprühgerät ist so ausgeführt, dass der Benutzer einen Teil des Sprühgeräts, der den ersten Flüssigkeitsbehälter umfasst, auf dem Rücken tragen und transportieren kann (Rucksack-Gerät). Ein anderer Teil, der die Sprühdüse umfasst, wird nach wie vor mit einer Hand getragen, aber die zweite Hand ist nun frei. Zum Tragen des Behälters auf dem Rücken ist er mit entsprechenden Gurten ausgestattet.

Das Sprühgerät ist mit einem ersten Behälter zur Aufnahme einer ersten Flüssigkeit ausgestattet. Der Begriff "Flüssigkeit" soll hier auch Lösungen, Emulsionen und Suspensionen erfassen.

Bei der ersten Flüssigkeit handelt es sich um ein Verdünnungsmittel. Das Verdünnungsmittel wird eingesetzt, um die zweite Flüssigkeit, die sich in dem zweiten Behälter befindet, zu verdünnen. In einer bevorzugten Ausführungsform handelt es sich bei dem Verdünnungsmittel um Wasser.

Der erste Behälter weist vorzugsweise eine Öffnung auf, die mit einem wiederverschließbaren Verschluss verschlossen werden kann. Über die Öffnung kann der erste Behälter mit der ersten Flüssigkeit befüllt werden.

Der erste Behälter kann aus einem beliebigen Material bestehen, das mit der ersten Flüssigkeit kompatibel ist. Das bedeutet, dass das Material durch die erste Flüssigkeit nicht chemisch angegriffen wird und dass das Material für die erste Flüssigkeit undurchlässig ist.

Der erste Behälter wird drucklos betrieben. Dadurch, dass der Behälter keinem Überdruck standhalten muss, kann er aus entsprechend dünnwandigem und leichtem Material gefertigt werden. In einer bevorzugten Ausführungsform ist der erste Behälter als flexibler Beutel ausgeführt. Ein solcher Beutel weist Gurte auf, damit er wie ein Rucksack auf den Rücken geschnallt und getragen werden kann.

Der zweite Behälter kann ebenfalls drucklos betrieben. Er enthält die zweite Flüssigkeit. Dementsprechend muss der zweite Behälter kompatibel mit der zweiten Flüssigkeit sein, d.h., das Material des zweiten Behälters wird durch die zweite Flüssigkeit nicht chemisch angegriffen und das Material ist für die zweite Flüssigkeit undurchlässig.

Bei der zweiten Flüssigkeit handelt es sich um ein Konzentrat, das mittels des Verdünnungsmittels verdünnt werden soll. Es handelt sich bei der zweiten Flüssigkeit um eine Wirkstoffformulierung, die ein Pestizid umfasst. Es handelt sich bei der zweiten Flüssigkeit um ein Pestizid-Konzentrat. Vorzugsweise handelt es sich bei dem Pestizid um ein Mittel zur Bekämpfung tierischer Schädlinge, noch mehr bevorzugt um ein Akarizid (gegen Milben/Spinnentiere), ein Insektizid (gegen Schadinsekten) oder ein Rodentizid (gegen Nagetiere).

Der zweite Behälter ist als austauschbarer Einweg- oder Mehrwegbehälter ausgeführt. Er kann reversibel mit dem Sprühgerät verbunden werden. Das Sprühgerät und der zweite Behälter weisen dazu entsprechende Anschlussmittel auf.

Bei den Mitteln zum Anschließen des Behälters kann es sich beispielsweise um eine Schraub- oder Bajonettverbindung handeln.

In einer bevorzugten Ausführungsform ist der zweite Behälter zumindest anteilig aus einem Kunststoff gefertigt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform ist der zweite Behälter als Druckbehälter ausgeführt. Vorzugsweise enthält er neben der zweiten Flüssigkeit ein von der zweiten Flüssigkeit getrenntes, unter Druck stehendes Treibmittel. Der zweite Behälter weist vorzugsweise ein Ventil auf. Vorzugsweise wird das Ventil automatisch geöffnet, wenn der zweite Behälter an das erfindungsgemäße Sprühgerät angeschlossen wird. Das unter Druck stehende Treibmittel drückt die zweite Flüssigkeit aus dem zweiten Behälter in das Sprühgerät. Ein weiteres, in dem Sprühgerät befindliches Ventil stoppt den weiteren Fluss der zweiten Flüssigkeit. Dieses weitere Ventil öffnet sich vorzugsweise dann, wenn ein Nutzer einen Applikationsvorgang, üblicherweise durch Betätigen eines Handgriffs, startet.

Der zweite, als Druckbehälter ausgeführte Behälter kann beispielsweise aus Aluminium oder Weißblech bestehen - Materialien, die druckbeständig sind und beispielsweise in Spraydosen (z.B. Rasierschaum) verwendet werden.

Es ist denkbar, dass der zweite Behälter einen Beutel mit der zweiten Flüssigkeit enthält, wobei der Beutel mit dem Ventil verbunden ist (Ventilbeutelsystem). Das Treibmittel umgibt den mit der zweiten Flüssigkeit befüllten Beutel und übt den notwendigen Druck für das Herausdrücken der zweiten Flüssigkeit aus dem zweiten Behälter aus (siehe z.B. DE69820260T2, US5505039, EP0718213A).

Denkbar ist aber auch, dass Treibmittel und zweite Flüssigkeit durch einen Kolben voneinander getrennt sind (siehe z.B. DE3934237A1). Das Treibmittel übt einen Druck auf den Kolben auf. Ist das Ventil geöffnet, wird die zweite Flüssigkeit durch den Kolben aus dem zweiten Behälter gedrückt. Denkbar ist beispielsweise die Verwendung eines ZIMA-Kolbens.

In einer bevorzugten Ausführungsform der vorliegenden Erfindung weist der zweite Behälter Mittel auf, die eine Kommunikation mit der Kontrolleinheit des Sprühgeräts erlauben. In einer bevorzugten Ausführungsform erlauben es diese Mittel der Kontrolleinheit, ein Mischungsverhältnis zu ermitteln. Denkbar ist beispielsweise, dass die Mittel zum Anschließen des zweiten Behälters an das Sprühgerät über elektrische Kontakte verfügen, die beim Anschließen des zweiten Behälters einen elektrischen Kontakt zwischen Sprühgerät und Kontrolleinheit herstellen, über den eine elektronische Kommunikation zwischen Kontrolleinheit und zweitem Behälter ermöglicht wird. Der zweite Behälter kann beispielsweise einen elektronischen Speicher umfassen, der über den hergestellten Kontakt von der Kontrolleinheit ausgelesen werden kann. In diesem Speicher können Informationen über die im zweiten Behälter vorhandene Flüssigkeit gespeichert sein. Insbesondere kann dort ein Mischungsverhältnis abgelegt sein, d.h. Informationen darüber, in welchem Verhältnis die erste und die zweite Flüssigkeit miteinander gemischt werden sollen.

Handelt es sich bei der zweiten Flüssigkeit um ein Konzentrat, das vor der Applikation mit einem Verdünnungsmittel verdünnt werden muss, so sollte der einzustellende Verdünnungsgrad an oder auf dem Behälter vermerkt und/oder gespeichert sein. In der beschriebenen bevorzugten Ausführungsform ist der einzustellende Verdünnungsgrad in einer Form gespeichert, in der er von der Kontrolleinheit ermittelt werden kann. Dies kann wie beschrieben über eine elektronische Kommunikation erfolgen. Neben der beschriebenen kontaktbehafteten Kommunikation ist natürlich auch eine kontaktlose Kommunikation möglich, d.h. über elektromagnetische Wellen (Bluetooth, Nahfeld-Kommunikation, u.a.).

Des Weiteren verfügt das erfindungsgemäße Sprühgerät über eine Sprühdüse. Über die Sprühdüse wird eine Mischung aus der ersten und der zweiten Flüssigkeit auf ein Zielobjekt abgegeben. Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.

Vorzugsweise ist die Sprühdüse austauschbar, so dass ein Anwender eine an die Applikation und das Zielobjekt angepasste Sprühdüse mit einer gewünschten Tropfengrößenverteilung und räumlichen Verteilung des Sprühguts auswählen kann.

Die Sprühdüse kann beispielsweise lanzenförmig oder pistolenförmig sein oder ein andere Form aufweisen. Vorzugsweise ist sie so ausgeführt, dass sie vom Benutzer mit einer Hand gehalten und auf das Zielobjekt gerichtet werden kann.

Die Sprühdüse weist erfindungsgemäß einen Handgriff auf, der vom Nutzer betätigt wird, um einen Sprühvorgang zu starten. Durch Betätigen des Handgriffs wird ein Ventil geöffnet, so dass erste und zweite Flüssigkeit aus ihren jeweiligen Behältern in Richtung Sprühdüse und durch die Sprühdüse auf das Zielobjekt gefördert werden.

In einer bevorzugten Ausführungsform weisen die auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise kodiert sein, die von der Kontrolleinheit gelesen werden kann, so dass der Benutzer derartige Parameter nicht manuell einstellen muss.

Vor der Sprühdüse ist ein Ventil angebracht. Vorzugsweise kann dieses Ventil manuell betätigt werden, so dass der Benutzer die Sprühdüse auf das Zielobjekt richten und durch manuelles Öffnen des Ventils den Sprühvorgang starten kann.

Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.

Denkbar ist auch, dass das Ventil automatisch geöffnet wird, wenn sich die Sprühdüse dem Zielobjekt nähert. Dies kann beispielsweise mittels Sensoren oder GPS-gestützt (GPS=Globales Positionsbestimmungssystem) erfolgen.

Das erfindungsgemäße Sprühgerät verfügt über zwei Pumpen, eine erste Pumpe zum Fördern der ersten Flüssigkeit aus dem ersten Behälter in Richtung Sprühdüse und eine zweite Pumpe zum Fördern der zweiten Flüssigkeit aus dem zweiten Behälter in Richtung Sprühdüse.

In einer bevorzugten Ausführungsform wird als zweite Pumpe zum Fördern der zweiten Flüssigkeit eine Schrittmotor-Dosierpumpe verwendet (siehe z.B.: DE102004047584, WO2012048976, DE102009006203). Durch den Schrittmotorantrieb können auch kleine Mengen der zweiten Flüssigkeit mit hoher Genauigkeit der ersten Flüssigkeit beigemengt werden.

Das erfindungsgemäße Sprühgerät weist einen Durchflussmesser zur Messung des Flusses der ersten Flüssigkeit aus dem ersten Behälter in Richtung der Sprühdüse auf. Mit einem solchen Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.

Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

In einer bevorzugten Ausführungsform wird die Durchflussmessung mit Hilfe eines Differenzdrucksensors vorgenommen.

In einer weiteren bevorzugten Ausführungsform wird ein Flügelradsensor zur Durchflussmessung eingesetzt. Das Messprinzip beruht darauf, dass ein Flügelrad eine Drehzahl proportional zur Strömungsgeschwindigkeit eines Fluids annimmt, durch das das Flügelrad angetrieben wird. Zur Messung der Drehzahl kann ein Permanentmagnet an das Flügelrad angebracht werden, der sich mit dem Flügelrad mitbewegt. Ein Hall-Sensor, an dem sich der Permanentmagnet vorbeibewegt, kann als Impulszähler verwendet werden. Die pro Zeiteinheit gemessene Anzahl von Impulsen ist proportional zur Drehzahl des Flügelrads und damit zur Strömungsgeschwindigkeit des Fluids.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Anhand der Flüssigkeitsmenge der in Richtung Sprühdüse fließenden ersten Flüssigkeit regelt die Kontrolleinheit erfindungsgemäß den Fluss der zweiten Flüssigkeit aus dem zweiten Behälter in Richtung Sprühdüse.

Erste und zweite Flüssigkeit verlassen das Sprühgerät gemeinsam als Mischung durch die Sprühdüse.

Es wäre denkbar, die erste Flüssigkeit und die zweite Flüssigkeit in der Sprühdüse über entsprechende Zuleitungen zusammenzuführen; es hat sich jedoch gezeigt, dass die erste und zweite Flüssigkeit in diesem Fall nicht ausreichend durchmischt sind, wenn sie auf das Zielobjekt gelangen. Es existiert daher eine Mischkammer vor der Sprühdüse, in welche die erste und die zweite Flüssigkeit über zwei separate Zuleitungen eingebracht werden. In der Mischkammer kommt es dann zu einer Durchmischung der ersten und der zweiten Flüssigkeit, bevor die Mischung in die Sprühdüse eintritt.

Die Mischkammer verfügt dementsprechend über einen Einlass für die erste Flüssigkeit, einen Einlass für die zweite Flüssigkeit und einen Auslass für eine Mischung von erster und zweiter Flüssigkeit. Die Mischkammer kann auch ein Abschnitt der Zuleitung für die erste Flüssigkeit zur Sprühdüse sein, in den eine Leitung für die zweite Flüssigkeit mündet.

Die Durchmischung kann durch geeignete Maßnahmen gefördert werden, beispielsweise durch statische Mischelemente.

Die Leitungen zwischen dem zweiten Behälter und der Mischkammer sind vorzugsweise so ausgeführt, dass sie ein geringes Volumen aufweisen. Nach einem Applikationsvorgang verbleiben Restmengen der (unverdünnten) zweiten Flüssigkeit in den Leitungen zwischen zweitem Behälter und Mischkammer. Gegebenenfalls müssen diese Restmengen entsorgt werden; ggf. müssen die Leitungen bei einem Wechsel des zweiten Behälters gereinigt werden. Je geringer das Volumen ist, desto geringer sind die Restmengen, die entsorgt werden müssen und so geringer ist das zu reinigende Volumen. Vorzugsweise beträgt das Volumen, das die zweite Flüssigkeit auf ihrem Weg in Richtung Mischkammer zwischen dem zweiten Behälter und der Mischkammer einnehmen kann, weniger als 50 mL, noch mehr bevorzugt weniger als 30 mL, noch mehr bevorzugt weniger als 10 mL.

Vorzugsweise wird die zweite Flüssigkeit quer zur Strömungsrichtung der ersten Flüssigkeit dieser beigefügt. Der Begriff "quer" bedeutet: in einem Winkel im Bereich von 20° bis 160°, bevorzugt 50° bis 130°, mehr bevorzugt 70° bis 110°, am meisten bevorzugt 80° bis 100°.

In einer bevorzugten Ausführungsform wird die zweite Flüssigkeit durch einen Stromteiler in die erste Flüssigkeit dosiert. In einer weiteren bevorzugten Ausführungsform wird die zweite Flüssigkeit in die erste Flüssigkeit dosiert und beide Flüssigkeiten durchlaufen gemeinsam einen Stromteiler. Ein Stromteiler ist ein statisches Element, das einen Strom einer Flüssigkeit in eine Mehrzahl an Stromfäden aufteilt. Vorzugsweise ist der Stromteiler in Form eines Siebs ausgeführt, d.h. die Flüssigkeiten) wird(werden) in Strömungsrichtung durch ein Sieb gedrückt, das den Strom in Stromfäden zerteilt. Durch ein solches Sieb werden insbesondere Tropfen der zweiten Flüssigkeit, die in die erste Flüssigkeit gelangen, in eine Mehrzahl an kleinen Tropfen zerteilt. Turbulenzen hinter dem Sieb führen zu einer Dispersion der kleinen Tropfen in der ersten Flüssigkeit. Überraschend wurde gefunden, dass ein solches Sieb als statisches Mischelement ausreichend ist, um an der Sprühdüse eine ausreichende Durchmischung von erster und zweiter Flüssigkeit zu erzielen. Wird kein Sieb verwendet, kann beobachtet werden, dass einzelne Tropfen der zweiten Flüssigkeit über den Leitungsweg von Mischkammer zur Sprühdüse erhalten bleiben und damit eine inhomogene Mischung die Sprühdüse verlässt. Weitergehende statische Mischelemente als ein Sieb sind überraschenderweise nicht nötig, um an der Sprühdüse eine ausreichende Durchmischung zu erzielen. Ein Sieb hat zudem gegenüber einem klassischen Statikmischer, der abwechselnd den Fluidstrom aufteilt, verdrillt und zusammenfügt, den Vorteil eines wesentlich geringeren Druckverlusts. Vor der Sprühdüse sollte ein Druck herrschen, der in einem definierten Bereich liegt, damit die Sprühdüse eine gewünschte räumliche Verteilung der Flüssigkeit erzielen kann. Dieser Druck wird durch die Fördermittel des Sprühgeräts bereitgestellt. Der Druck, der durch die Fördermittel bereitgestellt wird, muss jedoch höher sein, als der vor der Sprühdüse gewünschte Druck, um den Druckverlust über die vorhandenen Zuleitungen, Mischkammer, Mischelemente etc. zu kompensieren. Ein höherer Druckverlust bedeutet jedoch auch einen höheren Energieaufwand zur Kompensation des Druckverlusts, was bei Verwendung von batteriebetriebenen Pumpen eine höhere Traglast zur Folge hat. Vorzugsweise ist das Sieb wie ein Netz mit einer Maschenweite von 10 µm bis 500 µm, mehr bevorzugt 50 µm bis 250 µm, am meisten bevorzugt 80 µm bis 120 µm ausgeführt. Die Stege zwischen den Maschen haben üblicherweise eine Breite, die geringer ist als die Maschenweite, um den Strömungswiderstand und damit den Druckverlust so gering wie möglich zu halten.

Das erfindungsgemäße Sprühgerät weist ferner eine Kontrolleinheit auf. Diese Kontrolleinheit sorgt für eine Regelung der Menge der zweiten Flüssigkeit aus dem zweiten Behälter in Richtung Sprühdüse. Diese Regelung erfolgt erfindungsgemäß auf Basis des mittels des Durchflussmessers gemessenen Flusses der ersten Flüssigkeit aus dem ersten Behälter in Richtung Sprühdüse. Ein weiterer Parameter, der in die Regelung einfließt, ist das einzustellende Mischungsverhältnis. Dieses kann vom Benutzer vorgegeben werden, indem dieser das Mischungsverhältnis z.B. in die Kontrolleinheit eingibt; möglich ist aber auch, dass die Kontrolleinheit das Mischungsverhältnis durch eine Kommunikation mit einer Speichereinheit des zweiten Behälters erfasst.

Wie oben beschrieben ist die Kontrolleinheit in einer bevorzugten Ausführungsform der vorliegenden Erfindung mit dem auswechselbaren zweiten Behälter in der Weise verbunden, dass die Kontrolleinheit von dem auswechselbaren zweiten Behälter einen einzustellenden Verdünnungsgrad für das im auswechselbaren zweiten Behälter enthaltene Konzentrat empfangen kann.

Die Kontrolleinheit empfängt die Messwerte des Durchflussmessers in Bezug auf den Fluss der ersten Flüssigkeit und regelt den Fluss der zweiten Flüssigkeit, so dass die erste und die zweite Flüssigkeit das Sprühgerät über die Sprühdüse als Mischung mit einem konstanten Mischungsverhältnis verlassen. Unter "konstantem Mischungsverhältnis" wird verstanden, dass das Mischungsverhältnis über die Sprühdauer innerhalb eines vordefinierten Bereichs liegt.

In einer weiteren bevorzugten Ausführungsform erfasst die Kontrolleinheit die Menge an applizierter zweiter Flüssigkeit und speichert diesen Wert und überträgt diesen Wert beispielsweise zu einem vom Benutzer definierbaren Zeitpunkt an ein externes Computersystem. Auf diese Weise kann die Menge an applizierter zweiter Flüssigkeit nachgehalten werden.

In einer bevorzugten Ausführungsform wird zu der Menge der jeweils applizierten zweiten Flüssigkeit auch die Position (die GPS-gestützt ermittelt werden kann) der Applikation erfasst.

In einer weiteren bevorzugten Ausführungsform wird anhand der applizierten Menge an zweiter Flüssigkeit die Restmenge an zweiter Flüssigkeit im zweiten Behälter ermittelt. Vorzugsweise wird der Wert für diese Restmenge in eine Speichereinheit im Sprühgerät und/oder am zweiten Behälter gespeichert.

In einer bevorzugten Ausführungsform weist das erfindungsgemäße Sprühgerät einen Drucksensor auf, der den Druck in der Zuleitung zur Sprühdüse misst.

Werden die erste und die zweite Flüssigkeit in Richtung Sprühdüse gefördert, baut sich vor der Sprühdüse in Druck auf. Um ein gleichbleibendes Sprühmuster zu erzeugen, ist es erforderlich, dass dieser Druck während des Sprühvorgangs konstant bleibt. Um dies zu gewährleisten, ist der Drucksensor mit der Kontrolleinheit verbunden, die den Fluss der ersten und der zweiten Flüssigkeit so regelt, dass der gemessene Druck konstant bleibt.

Die Erfindung wird nachfolgend anhand von Ausführungsbeispielen näher erläutert, ohne die Erfindung jedoch auf diese Beispiele beschränken zu wollen.

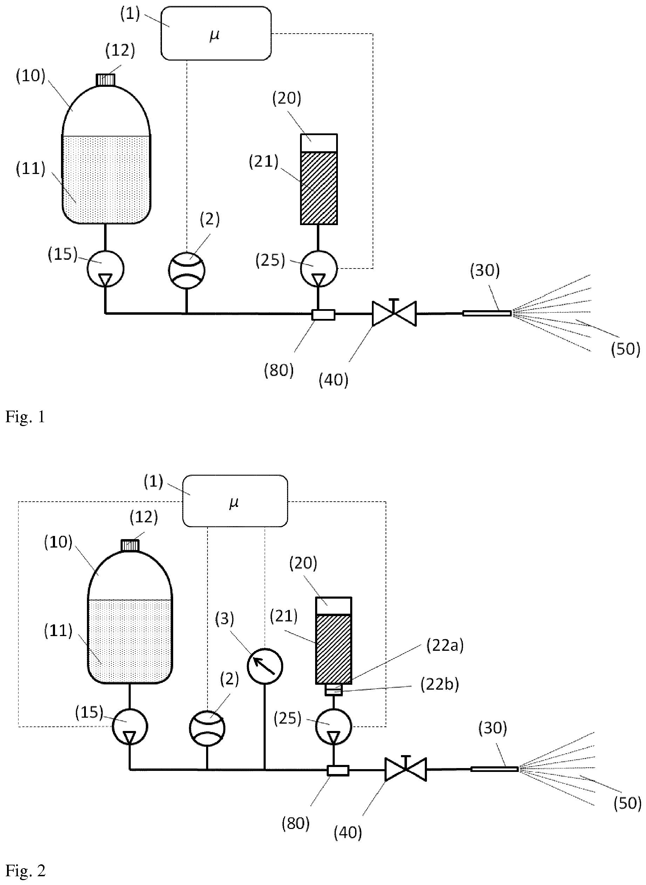

Figur 1 zeigt schematisch eine Ausführungsform des erfindungsgemäßen Sprühgeräts. Das Sprühgerät umfasst einen ersten Behälter (10) mit einer ersten Flüssigkeit (11), einen zweiten Behälter (20) mit einer zweiten Flüssigkeit (21), eine Sprühdüse (30), ein Ventil (40), eine erste Pumpe (15) zur Förderung der ersten Flüssigkeit (11) aus dem ersten Behälter (10) in Richtung Sprühdüse (30), eine zweite Pumpe (25) zur Förderung der zweiten Flüssigkeit (21) aus dem zweiten Behälter (20) in Richtung Sprühdüse (30), eine Mischkammer (80), einen Durchflussmesser (2) zur Messung des Flusses der ersten Flüssigkeit (11) aus dem ersten Behälter (10) in Richtung Sprühdüse (30) und eine Kontrolleinheit (1).

Der erste Behälter (10) ist als flexibler Beutel ausgeführt, der eine Öffnung zum Einfüllen der ersten Flüssigkeit (11) umfasst, wobei die Öffnung durch einen Verschluss (12) reversibel verschlossen werden kann.

Die zweite Flüssigkeit (21) trifft in der Mischkammer (80) auf die erste Flüssigkeit (11).

Bei geöffnetem Ventil (40) wird die erste Flüssigkeit (11) mittels der ersten Pumpe (15) in Richtung Sprühdüse (30) gefördert. Der Fluss der ersten Flüssigkeit wird mittels Durchflussmesser (2) gemessen. Der Durchflussmesser (2) steht mit der Kontrolleinheit (1) in einer kommunikativen Verbindung (dargestellt durch die gestrichelte Linie). Der vom Durchflussmesser (2) gemessene Fluss wird an die Kontrolleinheit (1) übertragen. Die Kontrolleinheit (1) steht mit der zweiten Pumpe (25) in einer kommunikativen Verbindung (dargestellt durch die gestrichelte Linie). Die Kontrolleinheit (1) regelt den Fluss der zweiten Flüssigkeit (21) in Richtung Sprühdüse, so dass die erste Flüssigkeit und die zweite Flüssigkeit die Sprühdüse in Form einer Mischung (50) mit einem gleichbleibenden Mischungsverhältnis verlassen.

Figur 2 zeigt schematisch eine bevorzugte Ausführungsform des erfindungsgemäßen Sprühgeräts.

Das Sprühgerät umfasst eine Kontrolleinheit (1), einen Durchflussmesser (2), einen Drucksensor (3), einen ersten Behälter (10) mit einer ersten Flüssigkeit (11), einen zweiten Behälter (20) mit einer zweiten Flüssigkeit (21), eine erste Pumpe (15), eine zweite Pumpe (25), eine Sprühdüse (30), eine Mischkammer (80) und ein Ventil (40).

Der erste Behälter (10) ist als flexibler Beutel ausgeführt, der eine Öffnung zum Einfüllen der ersten Flüssigkeit (11) umfasst, wobei die Öffnung durch einen Verschluss (12) reversibel verschlossen werden kann.

Der zweite Behälter (20) ist als austauschbare Kartusche ausgeführt. Die Kartusche wird über Anschlussmittel (22a) zum Anschließen der Kartusche an das Sprühgerät mit dem Sprühgerät verbunden. Das Sprühgerät weist zu den Anschlussmitteln (22a) der Kartusche kompatible Anschlussmittel (22b) auf.

Die Kontrolleinheit (1) steht in einer kommunikativen Verbindung (dargestellt durch gestrichelte Linien) mit dem Durchflussmesser (2), dem Druckmesser (3), der ersten Pumpe (15) und der zweiten Pumpe (25). Die Pumpen (15, 25) werden elektrisch betrieben.

Bei geöffnetem Ventil (40) wird die erste Flüssigkeit (11) aus dem ersten Behälter (10) mittels der ersten Pumpe (15) in Richtung Sprühdüse (30) gefördert. Mittels des Durchflussmessers (2) wird dieser Fluss der ersten Flüssigkeit (11) gemessen. Der Messwert wird an die Kontrolleinheit (1) übertragen. Gleichzeitig wird der Druck in der Zuleitung zur Sprühdüse (30) mittels des Drucksensors (3) gemessen. Dieser Messwert wird ebenfalls an die Kontrolleinheit (1) übermittelt. Die Kontrolleinheit (1) regelt über die erste Pumpe (15) und über die zweite Pumpe (25) den Fluss der ersten Flüssigkeit (11) und der zweiten Flüssigkeit (21) in Richtung Sprühdüse (30) so, dass die austretende Mischung (50) ein gleichbleibendes Mischverhältnis an erster und zweiter Flüssigkeit aufweist, und so, dass der Druck in der Zuleitung vor der Sprühdüse innerhalb eines vorgegebenen Bereichs liegt.

## Patentansprüche

1. Transportables Sprühgerät zur Schädlingsbekämpfung, das als Rucksack-Gerät ausgeführt ist, umfassend
- einen ersten Behälter (10) mit einer ersten Flüssigkeit (11), wobei der erste Behälter (10) über Gurte zum Transportieren des ersten Behälters (10) auf dem Rücken eines Menschen verfügt,
- einen zweiten Behälter (20) mit einer zweiten Flüssigkeit (21), wobei es sich bei der zweiten Flüssigkeit (21) um ein Pestizid-Konzentrat handelt, wobei es sich bei der ersten Flüssigkeit (11) um ein Verdünnungsmittel für das Pestizid-Konzentrat, vorzugsweise um Wasser handelt,
- eine Sprühdüse (30),
- eine erste Pumpe (15) zur Förderung der ersten Flüssigkeit (11) aus dem ersten Behälter (10) in Richtung Sprühdüse (30),
- eine zweite Pumpe zur (25) Förderung der zweiten Flüssigkeit (21) aus dem zweiten Behälter (20) in Richtung Sprühdüse (30),
- eine Mischkammer (80), mit einem Einlass für die erste Flüssigkeit (11), einem Einlass für die zweite Flüssigkeit (21) und einem Auslass für eine Mischung von erster und zweiter Flüssigkeit, und
- einen Handgriff, wobei durch Betätigen des Handgriffs durch einen Nutzer ein Ventil (40) geöffnet wird, so dass die erste Flüssigkeit (11) und die zweite Flüssigkeit (21) aus ihren jeweiligen Behältern (10, 20) in Richtung Sprühdüse (30) und durch die Sprühdüse (30) auf ein Zielobjekt gefördert werden
**dadurch gekennzeichnet, dass** das Sprühgerät
- einen Durchflussmesser (2) zur Messung des Flusses der ersten Flüssigkeit (11) aus dem ersten Behälter (10) in Richtung Sprühdüse (30) umfasst, und
- eine Kontrolleinheit (1) umfasst, die so konfiguriert ist, dass sie den Fluss der zweiten Flüssigkeit (21) in Richtung der Sprühdüse (30) auf Basis des gemessenen Flusses der ersten Flüssigkeit (11) regelt.

2. Sprühgerät nach Anspruch 1, **dadurch gekennzeichnet, dass** der erste Behälter (10) als flexibler Beutel ausgeführt ist.

3. Sprühgerät nach einem der Ansprüche 1 bis 2, **dadurch gekennzeichnet, dass** der zweite Behälter (20) als austauschbarer Einweg- oder Mehrwegbehälter ausgeführt ist.

4. Sprühgerät nach einem der Ansprüche 1 bis 3, **dadurch gekennzeichnet, dass** der zweite Behälter (20) als Druckbehälter ausgeführt ist, wobei ein unter Druck stehendes Treibmittel die zweite Flüssigkeit (21) aus dem zweiten Behälter (20) in das Sprühgerät drückt, wobei ein in dem Sprühgerät befindliches Ventil den weiteren Fluss der zweiten Flüssigkeit (21) stoppt, wobei sich das Ventil öffnet, wenn ein Nutzer einen Applikationsvorgang durch Betätigen des Handgriffs startet.

5. Sprühgerät nach einem der Ansprüche 1 bis 4, umfassend einen Drucksensor, der den Druck in einer Zuleitung zur Sprühdüse (30) misst.

6. Sprühgerät nach Anspruch 5, **dadurch gekennzeichnet, dass** die Kontrolleinheit (1) mit dem Drucksensor verbunden ist, um den Druck vor der Sprühdüse (30) in einem konstanten Bereich zu halten.

7. Sprühgerät nach einem der Ansprüche 1 bis 6, **dadurch gekennzeichnet, dass** der zweite Behälter (20) eine Speichereinheit umfasst, in der ein Mischungsverhältnis gespeichert ist, das angibt, in welchem Verhältnis die erste Flüssigkeit (11) und die zweite Flüssigkeit (21) gemischt werden müssen, um ein gewünschtes Sprühergebnis zu erzielen.

8. Sprühgerät nach Anspruch 7, **dadurch gekennzeichnet, dass** die Kontrolleinheit (1) so ausgeführt ist, dass sie das Mischungsverhältnis aus der Speichereinheit auslesen kann.

9. Verfahren zur Schädlingsbekämpfung durch Applikation einer Mischung aus einer ersten Flüssigkeit (11) und einer zweiten Flüssigkeit (21) auf ein Zielobjekt mittels eines transportablen, als Rucksack-Gerät ausgeführten Sprühgeräts, umfassend einen ersten Behälter (10) umfassend die erste Flüssigkeit (11), einen zweiten Behälter (20) umfassend die zweite Flüssigkeit (21), eine Sprühdüse (30), ein Ventil (40) und einen Handgriff,
wobei es sich bei der zweiten Flüssigkeit (21) um ein Pestizid-Konzentrat handelt, wobei es sich bei der ersten Flüssigkeit (11) um ein Verdünnungsmittel für das Pestizid-Konzentrat, vorzugsweise um Wasser handelt,
wobei das Verfahren die folgenden Schritte umfasst:
- Richten der Sprühdüse (30) auf das Zielobjekt,
- Betätigen des Handgriffs und dabei Öffnen des Ventils (40), und
- Applizieren der Mischung,
wobei bei Öffnen des Ventils (40) die erste Flüssigkeit (11) mittels einer ersten Pumpe (15) aus dem ersten Behälter (10) in Richtung Sprühdüse (30) gefördert wird,
**dadurch gekennzeichnet, dass** der Fluss der ersten Flüssigkeit (10) mittels eines Durchflussmessers (2) gemessen und der Messwert an eine Kontrolleinheit (1) übertragen wird, die Kontrolleinheit (1) eine zweite Pumpe (25) ansteuert und den Fluss der zweiten Flüssigkeit (21) aus dem zweiten Behälter (20) in Richtung der Sprühdüse (30) regelt, so dass die erste Flüssigkeit (11) und die zweite Flüssigkeit (21) in einem konstanten Mischungsverhältnis durch die Sprühdüse (30) treten.

10. Verfahren nach Anspruch 9, **dadurch gekennzeichnet, dass** ein Anwender während des Verfahrens einen Teil des Sprühgeräts, der den ersten Behälter (10) umfasst, auf dem Rücken trägt, und einen zweiten Teil des Sprühgeräts, der die Sprühdüse (30) umfasst, in einer Hand hält.

11. Verfahren nach einem der Ansprüche 9 bis 10, **dadurch gekennzeichnet, dass** der zweite Behälter (20) eine Speichereinheit umfasst, in der ein Mischungsverhältnis gespeichert ist, und die Kontrolleinheit (1) dieses Mischungsverhältnis aus der Speichereinheit ausliest und den Fluss der ersten Flüssigkeit (11) und/oder zweiten Flüssigkeit (21) entsprechend einstellt.

12. Verfahren nach einem der Ansprüche 9 bis 11, **dadurch gekennzeichnet, dass** die Menge an applizierter zweiter Flüssigkeit (21) erfasst und gespeichert wird.

13. Verfahren nach einem der Ansprüche 9 bis 12, **dadurch gekennzeichnet, dass** die Restmenge an in dem zweiten Behälter (20) verbleibender zweiter Flüssigkeit (21) erfasst und gespeichert wird.

14. Verfahren nach einem der Ansprüche 9 bis 13, **dadurch gekennzeichnet, dass** der zweite Behälter (20) als Druckbehälter ausgeführt ist, wobei ein unter Druck stehendes Treibmittel die zweite Flüssigkeit (21) aus dem zweiten Behälter (20) in das Sprühgerät drückt, wobei ein in dem Sprühgerät befindliches weiteres Ventil den weiteren Fluss der zweiten Flüssigkeit (21) stoppt, wobei sich das weitere Ventil öffnet, wenn ein Nutzer einen Applikationsvorgang durch Betätigen des Handgriffs startet.

## Claims

1. Transportable spraying device for pest control, which is embodied as a backpack device, comprising
- a first container (10) having a first liquid (11), wherein the first container (10) possesses straps for transporting the first container (10) on the back of a person;
- a second container (20) having a second liquid (21), wherein the second liquid (21) is a pesticide concentrate, wherein the first liquid (11) is a diluent for the pesticide concentrate, preferably water;
- a spraying nozzle (30);
- a first pump (15) for conveying the first liquid (11) from the first container (10) in the direction of the spraying nozzle (30);
- a second pump (25) for conveying the second liquid (21) from the second container (20) in the direction of the spraying nozzle (30);
- a mixing chamber (80), having an inlet for the first liquid (11), an inlet for the second liquid (21), and an outlet for a mixture of the first and of the second liquid; and
- a handle, wherein a valve (40) is opened by activating the handle by a user so that the first liquid (11) and the second liquid (21) are conveyed from their respective containers (10, 20) in the direction of the spraying nozzle (30) and through the spraying nozzle (30) onto a target object,
**characterized in that** the spraying device comprises
- a flow meter (2) for measuring the flow of the first liquid (11) from the first container (10) in the direction of the spraying nozzle (30); and
- a control unit (1) which is configured so that said control unit (1), based on the measured flow of the first liquid (11), regulates the flow of the second liquid (21) in the direction of the spraying nozzle (30).

2. Spraying device according to Claim 1, **characterized in that** the first container (10) is embodied as a flexible bag.

3. Spraying device according to one of Claims 1 to 2, **characterized in that** the second container (20) is embodied as a replaceable single-use or multiple-use container.

4. Spraying device according to one of Claims 1 to 3, **characterized in that** the second container (20) is embodied as a pressurized container, wherein a pressurized propellant forces the second liquid (21) out of the second container (20) into the spraying device, wherein a valve situated in the spraying device stops the further flow of the second liquid (21), wherein the valve opens when a user starts an application procedure by activating the handle.

5. Spraying device according to one of Claims 1 to 4, comprising a pressure sensor which measures the pressure in a feed line to the spraying nozzle (30).

6. Spraying device according to Claim 5, **characterized in that** the control unit (1) is connected to the pressure sensor so as to keep the pressure upstream of the spraying nozzle (30) in a constant range.

7. Spraying device according to one of Claims 1 to 6, **characterized in that** the second container (20) comprises a memory unit in which a mixing ratio is stored, which mixing ratio indicates the ratio with which the first liquid (11) and second liquid (21) have to be mixed in order to achieve a desired spraying result.

8. Spraying device according to Claim 7, **characterized in that** the control unit (1) is configured in such a way that it can read out the mixing ratio from the memory unit.

9. Method for pest control by applying a mixture of a first liquid (11) and of a second liquid (21) to a target object by means of a transportable spraying device embodied as a backpack device, comprising a first container (10) comprising the first liquid (11), a second container (20) comprising the second liquid (21), a spraying nozzle (30), a valve (40), and a handle,
wherein the second liquid (21) is a pesticide concentrate, wherein the first liquid (11) is a diluent for the pesticide concentrate, preferably water,
wherein the method comprises the following steps:
- directing the spraying nozzle (30) onto the target object;
- activating the handle and thereby opening the valve (40); and
- applying the mixture;
wherein, when the valve (40) is opened, the first liquid (11) is fed from the first container (10) in the direction of the spraying nozzle (30) by means of a first pump (15),
**characterized in that** the flow of the first liquid (10) is measured by means of a flow meter (2), and the measured value is transmitted to a control unit (1), the control unit (1) actuates a second pump (25) and regulates the flow of the second liquid (21) from the second container (20) in the direction of the spraying nozzle (30) so that the first liquid (11) and second liquid (21) pass through the spraying nozzle (30) with a constant mixing ratio.

10. Method according to Claim 9, **characterized in that** during the method a user carries a part of the spraying device that comprises the first container (10) on his/her back, and holds a second part of the spraying device that comprises the spraying nozzle (30) in one hand.

11. Method according to one of Claims 9 to 10, **characterized in that** the second container (20) comprises a memory unit in which a mixing ratio is stored, and the control unit (1) reads out this mixing ratio from the memory unit and sets the flow of the first liquid (11) and/or of the second liquid (21) correspondingly.

12. Method according to one of Claims 9 to 11, **characterized in that** the quantity of applied second liquid (21) is registered and stored.

13. Method according to one of Claims 9 to 12, **characterized in that** the residual quantity of second liquid (21) remaining in the second container (20) is registered and stored.

14. Method according to one of Claims 9 to 13, **characterized in that** the second container (20) is embodied as a pressurized container, wherein a pressurized propellant forces the second liquid (21) out of the second container (20) into the spraying device, wherein a further valve situated in the spraying device stops the further flow of the second liquid (21), wherein the further valve opens when a user starts an application procedure by activating the handle.

## Revendications

1. Appareil de pulvérisation transportable pour la lutte contre les nuisibles, conçu sous forme d'appareil à dos, comprenant
- un premier contenant (10) avec un premier liquide (11), le premier contenant (10) disposant de sangles pour transporter le premier contenant (10) sur le dos d'une personne,
- un deuxième contenant (20) avec un deuxième liquide (21), le deuxième liquide (21) consistant en un concentré de pesticide, le premier liquide (11) consistant en un diluant pour le concentré de pesticide, de préférence de l'eau,
- une buse de pulvérisation (30),
- une première pompe (15) pour acheminer le premier liquide (11) depuis le premier contenant (10) en direction de la buse de pulvérisation (30),
- une deuxième pompe (25) pour acheminer le deuxième liquide (21) depuis le deuxième contenant (20) en direction la buse de pulvérisation (30),
- une chambre de mélange (80), avec une entrée pour le premier liquide (11), une entrée pour le deuxième liquide (21) et une sortie pour un mélange du premier et du deuxième liquide, et
- une poignée, l'actionnement de la poignée par un utilisateur ouvrant une soupape (40) de telle sorte que le premier liquide (11) et le deuxième liquide (21) sont acheminés depuis leurs contenants respectifs (10, 20) en direction de la buse de pulvérisation (30) et à travers la buse de pulvérisation (30) sur un objet cible,
**caractérisé en ce que** l'appareil de pulvérisation comprend
- un débitmètre (2) pour mesurer le flux du premier liquide (11) depuis le premier contenant (10) en direction de la buse de pulvérisation (30), et
- une unité de contrôle (1), qui est configurée pour réguler le flux du deuxième liquide (21) en direction de la buse de pulvérisation (30) sur la base du flux mesuré du premier liquide (11).

2. Appareil de pulvérisation selon la revendication 1, **caractérisé en ce que** le premier contenant (10) est réalisé sous forme de sac flexible.

3. Appareil de pulvérisation selon l'une quelconque des revendications 1 à 2, **caractérisé en ce que** le deuxième contenant (20) est réalisé sous forme de contenant interchangeable à usage unique ou réutilisable.

4. Appareil de pulvérisation selon l'une quelconque des revendications 1 à 3, **caractérisé en ce que** le deuxième contenant (20) est réalisé sous forme de contenant sous pression, un agent propulseur sous pression poussant le deuxième liquide (21) depuis le deuxième contenant (20) dans l'appareil de pulvérisation, une soupape se trouvant dans l'appareil de pulvérisation arrêtant le flux ultérieur du deuxième liquide (21), la soupape s'ouvrant lorsqu'un utilisateur démarre une opération d'application par actionnement de la poignée.

5. Appareil de pulvérisation selon l'une quelconque des revendications 1 à 4, comprenant un capteur de pression qui mesure la pression dans une conduite d'alimentation de la buse de pulvérisation (30).

6. Appareil de pulvérisation selon la revendication 5, **caractérisé en ce que** l'unité de contrôle (1) est reliée au capteur de pression afin de maintenir la pression avant la buse de pulvérisation (30) dans une plage constante.

7. Appareil de pulvérisation selon l'une quelconque des revendications 1 à 6, **caractérisé en ce que** le deuxième contenant (20) comprend une unité de mémoire dans laquelle est mémorisé un rapport de mélange qui indique le rapport dans lequel le premier liquide (11) et le deuxième liquide (21) doivent être mélangés pour obtenir un résultat de pulvérisation souhaité.

8. Appareil de pulvérisation selon la revendication 7, **caractérisé en ce que** l'unité de contrôle (1) est conçue pour lire le rapport de mélange à partir de l'unité de mémoire.

9. Procédé de lutte contre les nuisibles par application d'un mélange d'un premier liquide (11) et d'un deuxième liquide (21) sur un objet cible au moyen d'un appareil de pulvérisation transportable, conçu sous forme d'appareil à dos, comprenant un premier contenant (10) comprenant le premier liquide (11), un deuxième contenant (20) comprenant le deuxième liquide (21), une buse de pulvérisation (30), une soupape (40) et une poignée,
le deuxième liquide (21) consistant en un concentré de pesticide, le premier liquide (11) consistant en un diluant pour le concentré de pesticide, de préférence de l'eau,
le procédé comprenant les étapes suivantes :
- l'orientation de la buse de pulvérisation (30) vers l'objet cible,
- l'actionnement de la poignée et ainsi l'ouverture de la soupape (40), et
- l'application du mélange,
lors de l'ouverture de la soupape (40), le premier liquide (11) étant acheminé au moyen d'une première pompe (15) depuis le premier contenant (10) en direction de la buse de pulvérisation (30),
**caractérisé en ce que** le flux du premier liquide (10) est mesuré au moyen d'un débitmètre (2) et la valeur mesurée est transmise à une unité de contrôle (1), l'unité de contrôle (1) commandant une deuxième pompe (25) et régulant le flux du deuxième liquide (21) depuis le deuxième contenant (20) en direction de la buse de pulvérisation (30), de telle sorte que le premier liquide (11) et le deuxième liquide (21) passent à travers la buse de pulvérisation (30) dans un rapport de mélange constant.

10. Procédé selon la revendication 9, **caractérisé en ce que**, pendant le procédé, un utilisateur porte sur son dos une partie de l'appareil de pulvérisation comprenant le premier contenant (10) et tient dans une main une deuxième partie de l'appareil de pulvérisation comprenant la buse de pulvérisation (30).

11. Procédé selon l'une quelconque des revendications 9 à 10, **caractérisé en ce que** le deuxième contenant (20) comprend une unité de mémoire dans laquelle est mémorisé un rapport de mélange, et l'unité de contrôle (1) lit ce rapport de mélange à partir de l'unité de mémoire et ajuste le flux du premier liquide (11) et/ou du deuxième liquide (21) en conséquence.

12. Procédé selon l'une quelconque des revendications 9 à 11, **caractérisé en ce que** la quantité de deuxième liquide (21) appliquée est détectée et mémorisée.

13. Procédé selon l'une quelconque des revendications 9 à 12, **caractérisé en ce que** la quantité résiduelle de deuxième liquide (21) restant dans le deuxième contenant (20) est détectée et mémorisée.

14. Procédé selon l'une quelconque des revendications 9 à 13, **caractérisé en ce que** le deuxième contenant (20) est réalisé sous forme de contenant sous pression, un agent propulseur sous pression poussant le deuxième liquide (21) depuis le deuxième contenant (20) dans l'appareil de pulvérisation, une autre soupape se trouvant dans l'appareil de pulvérisation arrêtant le flux ultérieur du deuxième liquide (21), l'autre soupape s'ouvrant lorsqu'un utilisateur démarre une opération d'application par actionnement de la poignée.
